# EUROPÄISCHE PATENTANMELDUNG

(11) **EP 1 973 299 A1**
(43) Veröffentlichungstag der Anmeldung: **24.09.2008**
(21) Anmeldenummer: 07006103.1
(22) Anmeldetag: 23.03.2007
(51) Int. Cl.: H04L 29/08

(54) **Drahtlos ansteuerbare, elektrische Funktionseinheit für ein Luftfahrzeug**

(71) Anmelder: Lufthansa Technik AG, 22335 Hamburg (DE)
(72) Erfinder: Muirhead, Andrew, 22848 Norderstedt (DE)
(74) Vertreter: Glawe, Delfs, Moll

(57) **Zusammenfassung**

Gegenstand der Erfindung ist eine drahtlos ansteuerbare elektrische oder elektronische Funktionseinheit (3) für ein Luftfahrzeug. Erfindungsgemäß ist vorgesehen, dass diese Funktionseinheit ein Removable Part ist und eine Einrichtung (5, 6) zum Identifizieren des Einbauortes im Luftfahrzeug aufweist.

## Beschreibung

Die Erfindung betrifft eine drahtlos ansteuerbare elektrische oder elektronische Funktionseinheit für ein Luftfahrzeug.

Die Elektronik, insbesondere Unterhaltungselektronik, an Bord eines Passagierflugzeugs wird zunehmend komplexer. Beispielsweise ist es inzwischen Standard, dass zumindest in der First und Business Class von Passagierflugzeugen an jedem Sitz individuelle Audio- und/oder Videoinhalte abrufbar sind. Entsprechende Funktionseinheiten müssen demnach individuell steuerbar sein und mit verschiedenen Inhalten gespeist werden können.

Der Erfindung liegt die Aufgabe zu Grunde, eine Funktionseinheit der Eingangs genannten Art zu schaffen, die die Ausrüstung eines Flugzeugs mit solchen Einheiten mit geringem Aufwand bei Installation und Wartung ermöglicht.

Gelöst wird diese Aufgabe dadurch, dass die Funktionseinheit ein Removable Part ist und eine Einrichtung zum Identifizieren des Einbauortes im Luftfahrzeug aufweist.

Zunächst werden einige im Rahmen der Erfindung verwendete Begriffe erläutert.

Eine elektrische oder elektronische Funktionseinheit ist jede Gruppe von Bauteilen, die als Ganzes eine bestimmte Funktion ausführen kann, beispielsweise Steuerungs- oder Kontrollfunktion, Ein- bzw. Ausgabe von Daten oder dergleichen.

Die Funktionseinheit ist drahtlos ansteuerbar. Dies bedeutet, dass sie drahtlos (vorzugsweise durch elektromagnetische Strahlung) Steuer- und/oder Kontrollsignale und/oder eingegebene bzw. auszugebende Daten (beispielsweise Audio- und/oder Videodaten) empfangen und/oder senden kann.

Die Funktionseinheit ist ein Removable Part. Dieser luftfahrtrechtliche Begriff bezeichnet eine Einheit, die ohne Erlöschen der Betriebsgenehmigung des Luftfahrzeugs im Zuge von Wartungsarbeiten ein- und ausgebaut bzw. ausgetauscht werden kann.

Erfindungsgemäß weist die Funktionseinheit eine Einrichtung zum Identifizieren des Einbauortes im Luftfahrzeug auf. Dies bedeutet, dass nach dem Einbauen der Funktionseinheit im Luftfahrzeug der genaue Einbauort ermittelt und elektronisch an eine lokale Datenbank der Funktionseinheit oder vorzugsweise an eine zentrale Datenbank in einem Rechner des Luftfahrzeugs übermittelt werden kann.

Die Erfindung ermöglicht es, elektrische Funktionseinheiten nach dem Einbau in ein Flugzeug problemlos einem bestimmten Einbauort zuzuordnen und diese drahtlos spezifisch zugeschnitten auf diesen Einbauort anzusteuern bzw. Steuerbefehle von diesem entgegenzunehmen.

Die inzwischen zum Standard gehörende Einrichtung von Video On Demand-Systemen an Bord von Luftfahrzeugen erfordert es, dass jedes Videodisplay an einem Sitz bzw. gegebenenfalls an einer Gruppe von Sitzen individuell mit Inhalten aus einem zentralen Audio/Videoserver gespeist werden kann. Im Stand der Technik ist es üblich, zu diesem Zweck zu jedem Sitz sowohl eine Stromversorgung als auch mit dem entsprechenden Server verbundene Signalkabel zu legen, über den der Befehls/Datenaustausch mit dem Audio/Videoserver stattfinden kann. Diese Verkabelung bedeutet einen extrem hohen Aufwand.

Grundsätzlich ist es zwar bereits im Stand der Technik bekannt, in Flugzeugen drahtlose Datennetzwerke wie beispielsweise Ethernets oder W-Lans zu installieren. Anders als bei einer festen Verkabelung bedarf es bei einer Kommunikation über ein drahtloses Netzwerk einer genauen Identifikation der Funktionseinheit im drahtlosen Netzwerk. Innerhalb eines drahtlosen Netzwerks nach dem IP-Protokoll weist jede Einheit eine bestimmte MAC-Adresse auf. Diese korrespondiert jedoch nicht mit einem entsprechenden Einbauort im Flugzeug, insbesondere beispielsweise nicht mit einer bestimmten Sitznummer. Wenn ein Passagier auf Sitz 2A einen bestimmten Film anfordert, muss dieser über das drahtlose Netzwerk dem Display am entsprechenden Einbauort übermittelt werden. Dieser korrespondiert nicht ohne weiteres mit der MAC-Adresse des zugehörigen Displays.

Die erfindungsgemäße Einrichtung zum Identifizieren des Einbauortes im Luftfahrzeug ermöglicht die Zuordnung jeder Funktionseinheit mit ihrer MAC-Adresse zu einem bestimmten Einbauort (beispielsweise Sitznummer) und damit eine eindeutige Adressierung dieser Funktionseinheit im drahtlosen Netzwerk anhand des Einbauortes.

Die Einrichtung zum Identifizieren des Einbauortes im Luftfahrzeug arbeitet vorzugsweise berührungslos. Dies bedeutet, dass kein mechanischer Kontakt zum Identifizieren des Einbauortes stattfinden muss.

Vorzugsweise weist die Einrichtung zum Identifizieren des Einbauortes im Luftfahrzeug wenigstens einen RFID-Tag (Radio Frequency Identification Tag) und wenigstens einen RFID-Reader auf. Bevorzugt ist es, dass wenigstens ein RFID-Reader der Funktionseinheit und wenigstens ein RFID-Tag dem Einbauort zugeordnet ist.

Bei dieser bevorzugten Ausführungsform ist somit jedem Einbauort (beispielsweise Sitz) ein RFID-Tag zugeordnet. Bei diesen im Stand der Technik bekannten Bauteilen handelt es sich um passive Bauelemente, die insbesondere keine eigene Energieversorgung benötigen. Beispielsweise kann beim Einbau eines Sitzes der zugehörige RFID-Tag am vorgesehenen Einbauort des zugehörigen Entertainment-Displays mit der Sitznummer beschrieben werden.

Die Funktionseinheit weist bei der geschilderten bevorzugten Ausführungsform ein aktives RFID-Lesegerät (RFID-Reader) auf. Nach dem Einbau bzw. Austausch einer solchen Funktionseinheit wird dieser Reader aktiviert und liest die zugehörige Sitznummer von dem RFID-Tag. In einer externen Datenbank (beispielsweise im Audio/Videoserver des Luftfahrzeugs) kann jetzt die MAC-Adresse der Funktionseinheit der entsprechenden Sitznummer zugeordnet werden, so dass diese Funktionseinheit jetzt gezielt über ihre Sitznummer ansteuerbar ist.

Das Aktivieren des RFID-Readers kann wahlweise automatisch ausgelöst werden durch den Einbauvorgang der Funktionseinheit oder aber manuell beispielsweise durch Betätigen einer entsprechenden Vorrichtung bzw. eines Schalters oder Tasters an der Funktionseinheit nach deren Einbau. Es ist ebenfalls möglich, nach dem Einbau/Austausch von Funktionseinheiten die RFID-Reader sämtlicher Funktionseinheiten oder einiger Funktionseinheiten zentral über das drahtlose Netzwerk zu aktiveren und auf diese Art und Weise die zugehörige Sitznummer des RFID-Tag auszulesen und der MAC-Adresse der Funktionseinheit zuordnen zu lassen.

Statt RFID-Tags und -Readern sind im Rahmen der Erfindung bspw. auch Barcodes oder sonstige optische Codes und entsprechende Lesegeräte verwendbar.

Im Rahmen der Erfindung ist es bevorzugt, wenn die Funktionseinheit über ein W-Lan drahtlos ansteuerbar ist. Sie ist bei einer bevorzugten Ausführungsform zur Ausgabe von Audio- und/oder Videoinhalten ausgebildet, weist insbesondere vorzugsweise ein entsprechendes Display (Bildschirm) auf. Die Funktionseinheit kann im Rahmen der Erfindung selbst mit Bedien- und Steuerelementen versehen sein, beispielsweise entsprechende Steuertasten aufweisen oder einen Touchscreen aufweisen. Alternativ kann sie über eine weitere separate Funktionseinheit vom Benutzer bedient werden, beispielsweise über eine separate Fernbedienung oder über ein Bedienpanel beispielsweise in der Armlehne des Sitzes getrennt vom eigentlichen Display.

Gegenstand der Erfindung ist ferner ein Luftfahrzeug mit einer Mehrzahl von erfindungsgemäßen Funktionseinheiten und einer Mehrzahl von Einbauorten für diese Funktionseinheiten. Jeder Einbauort ist einem Sitz oder einer Gruppe von Sitzen zugeordnet und die erfindungsgemäße Einrichtung zum Identifizieren des Einbauortes im Luftfahrzeug ist zum Identifizieren des Sitzes oder der Gruppe von Sitzen ausgebildet, an denen die entsprechende Funktionseinheit verbaut wird. Vorzugsweise ist jedem Einbauort ein RFID-Tag zugeordnet, der den zugehörigen Sitz oder die Gruppe von Sitzen identifiziert. Das Luftfahrzeug weist vorzugsweise zusätzlich eine Speichereinrichtung auf (beispielsweise einen entsprechenden Speicher im Audio- und/oder Videoserver), in der die elektronische Adresse jeder Funktionseinheit (MAC-Adresse) einem Sitz oder einer Gruppe von Sitzen zugeordnet ist.

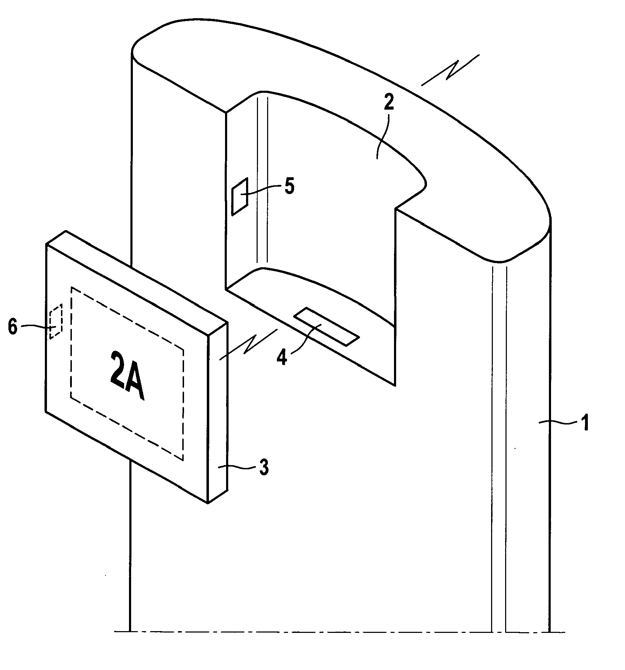

Ein Ausführungsbeispiel der Erfindung wird im Folgenden anhand der Zeichnung erläutert. Eine Sitzlehne 1 weist eine Einbaumulde 2 für ein Display 3 eines Cabin-Entertainment-Systems auf. In der Einbaumulde 2 ist ein elektrisches Verbindungselement 4 vorgesehen, über dass das Display 3 mit Betriebsspannung versorgt wird.

In der Einbaumulde 2 ist ein passiver RFID-Tag 5 angeordnet. Beim Einbau des Sitzes wird dieser mit der aktuellen Sitznummer beschrieben und speichert somit als elektronisches Speichermittel permanent die Sitznummer des Einbauortes bzw. der Einbaumulde 2.

Die Display-Einheit 3 ist zur drahtlosen Kommunikation über ein flugzeuginternes W-Lan mit anderen Einheiten, insbesondere einem entsprechenden Audio/Videoserver ausgelegt. Sie weist bei 6 einen über die Display-Einheit 3 selbst oder ferngesteuert über das W-Lan von einem entsprechenden zentralen Rechner oder Bedienpaneel aktivierbaren RFID-Reader auf.

Beim Einbau oder nach dem Austausch eines Displays 3 (beispielsweise nach einer Reparatur oder Wartung) gerät der RFID-Tag 5 in der Einbaumulde 2 in Reichweite des RFID-Lesegerätes 6. Es kann jetzt ausgelöst durch den Einbauvorgang oder manuell an der Display-Einheit 3 der RFID-Leser 6 aktiviert werden, um die Sitznummer aus dem RFID-Tag 5 auszulesen und über das drahtlose Netzwerk an einen Zentralrechner zu leiten. In diesem Zentralrechner wird in einer Datenbank die elektronische MAC-Adresse der Display-Einheit 3 zusammen mit der aus dem RFID-Tag 5 ausgelesenen Sitznummer abgelegt. Somit ist die Display-Einheit 3 jetzt über ihre Sitznummer ansteuerbar.

Alternativ kann (beispielsweise nach dem Einbau/Austausch mehrerer oder aller Display-Einheiten 3) der RFID-Lesevorgang zentral von einem Rechner aus gesteuert in mehreren oder allen Display-Einheiten 3 zentral aktiviert werden und die ausgelesenen Sitznummern werden dann zu dem Zentralrechner zurückgeleitet.

Es ist somit erfindungsgemäß möglich, problemlos eine Mehrzahl von Displays zur Wartungs- und/oder Reparaturzwecken aus- und wieder einzubauen, ohne sich um die genaue Zuordnung der Display-Einheiten zu den Sitzen kümmern zu müssen. Stattdessen wird nach dem Wiedereinbau der aktuelle Einbauort der Display-Einheiten 3 festgestellt und in dem zentralen Rechner des Flugzeugs gespeichert. Wenn jetzt ein Passagier an einem Sitz Audio- und/oder Videoinhalte aus dem Zentralrechner abruft, wird in der Datenbank des Zentralrechners zunächst die zu der entsprechenden Sitznummer zugehörige MAC-Adresse der Display-Einheit 3 aufgerufen und dann die entsprechenden Audio/Videoinhalte über das drahtlose Netzwerk an diese MAC-Adresse geschickt.

## Patentansprüche

1. Drahtlos ansteuerbare elektrische oder elektronische Funktionseinheit (3) für ein Luftfahrzeug, **dadurch gekennzeichnet, dass** die Funktionseinheit ein Removable Part ist und eine Einrichtung (5, 6) zum Identifizieren des Einbauortes im Luftfahrzeug aufweist.

2. Funktionseinheit nach Anspruch 1, **dadurch gekennzeichnet, dass** die Einrichtung (5, 6) zum Identifizieren des Einbauortes im Luftfahrzeug berührungslos arbeitet.

3. Funktionseinheit nach Anspruch 2, **dadurch gekennzeichnet, dass** die Einrichtung (5, 6) zum Identifizieren des Einbauortes im Luftfahrzeug wenigstens einen RFID-Tag (5) und wenigstens einen RFID-Reader (6) aufweist.

4. Funktionseinheit nach Anspruch 3, **dadurch gekennzeichnet, dass** wenigstens ein RFID-Reader (6) der Funktionseinheit und wenigstens ein RFID-Tag (5) dem Einbauort zugeordnet ist.

5. Funktionseinheit nach einem der Ansprüche 1 bis 4, **dadurch gekennzeichnet, dass** sie über ein W-Lan drahtlos ansteuerbar ist.

6. Funktionseinheit nach einem der Ansprüche 1 bis 5, **dadurch gekennzeichnet, dass** sie zur Ausgabe von Audio- und/oder Videoinhalten ausgebildet ist.

7. Funktionseinheit nach einem der Ansprüche 1 bis 6, **dadurch gekennzeichnet, dass** sie ein Display aufweist.

8. Luftfahrzeug, mit einer Mehrzahl von Funktionseinheiten (3) nach einem der Ansprüche 1 bis 7 und einer Mehrzahl von Einbauorten (2) für diese Funktionseinheiten, **dadurch gekennzeichnet, dass** jeder Einbauort einen Sitz (1) oder einer Gruppe von Sitzen zugeordnet sind und das die Einrichtung zum Identifizieren des Einbauortes im Luftfahrzeug zum Identifizieren des Sitzes (1) oder der Gruppe von Sitzen ausgebildet ist.

9. Luftfahrzeug nach Anspruch 8, **dadurch gekennzeichnet, dass** jedem Einbauort ein RFID-Tag (5) zugeordnet ist, der den zugehörigen Sitz (1) oder die Gruppe von Sitzen identifiziert.

10. Luftfahrzeug nach Anspruch 8 oder 9, **dadurch gekennzeichnet, dass** es zusätzlich eine Speichereinrichtung aufweist, in der die elektronische Adresse jeder Funktionseinheit einem Sitz (1) oder einer Gruppe von Sitzen zugeordnet ist.
